# EUROPEAN PATENT APPLICATION

(11) **EP 2 383 476 A1**
(43) Date of publication of application: **02.11.2011**
(21) Application number: 11163778.1
(22) Date of filing: 26.04.2011
(51) Int. Cl.: F16B 23/00, F16B 43/02, F16L 23/032

(54) **Concave-convex shapes on bolts and nuts to minimize bending**

(30) Priority: 29.04.2010 US 770659
(71) Applicant: General Electric Company, Schenectady, NY 12345 (US)
(72) Inventor: Nies, Jacob Johannes, 8042 HA, Zwolle (NL); Subramanian, Shanmuga-Priyan, 48429, Rheine (DE)
(74) Representative: Bedford, Grant Richard

(57) **Abstract**

A flange connection (100) is provided which includes a first flange (301) having a first mounting hole (308) and at least one second flange (302) having a second mounting hole adapted to be aligned with the first mounting hole (308). A bolt (101) including a shaft portion (102) having a threaded portion (105), and a head portion (103) formed at one end of the shaft portion (102) is adapted to pass through the first and second mounting holes (308). A screw nut (201) is adapted to be screwed onto the threaded portion (105) and for connecting, when tightened, the first flange (301) and the at least one second flange (302). At least one of the head portion (103) and the screw nut (201) includes a convex surface which is oriented towards the respective flange, and the respective flange includes, at the mounting hole (308), a flange recess (306) which is oriented towards the convex surface.

## Description

The present disclosure generally relates to a flange connection for connecting at least two components or flanges to be connected. In particular, the present disclosure relates to a flange connection for connecting components having an imperfect mating surface with respect to each other.

Typically parts or components or flanges to be connected are bolted together by inserting a shaft portion of a bolt into holes of each of the components to be connected and by screwing a screw nut onto a threaded portion of the bolt. This screw nut may then be tightened such that the at least two components to be connected, e.g. flanges to be connected are securely attached to each other.

For example, components of a tower of a wind turbine are connected by bolts such that an entire tower may be provided by a supplier in portions which easily can be transported to the location where a wind turbine will be installed. At the location of the wind turbine the individual portions of the tower are connected by a flange connection including bolts with threaded portions and nuts.

Due to heavy loads applied at such kind of a tower of a wind turbine the flange connection is typically stressed by a to a great extend. Stresses applied at bolts and nuts may act in a longitudinal direction of the bolts and in a shear direction, i.e. in a direction perpendicular to a longitudinal axis of the bolt, or in a direction which is the combination of the two mentioned above.

It is desired to provide a flange connection having a large rigidity with respect to different kinds and directions of applied forces and moments, and wherein resulting assembling costs are low.

In view of the above, according to an aspect of the present invention a flange connection is provided including a first flange having a first mounting hole, at least one second flange having a second mounting hole adapted to be aligned with the first mounting hole, a bolt including a shaft portion having a threaded portion, and a head portion formed at one end of the shaft portion, the bolt being adapted to pass through the first and second mounting holes, and a screw nut adapted to be screwed onto the threaded portion and for connecting, when tightened, the first flange and the at least one second flange, wherein at least one of the head portion and the screw nut includes a convex surface which is oriented towards the respective flange, and wherein the respective flange includes, at the mounting hole, a flange recess which is oriented towards the convex surface.

According to another aspect a wind turbine having a tower, a machine nacelle and at least one flange connection adapted for mechanically connecting at least two components of the tower or of the machine nacelle is provided, the flange connection including a first flange having a first mounting hole, at least one second flange having a second mounting hole adapted to be aligned with the first mounting hole, a bolt including a shaft portion having a threaded portion, and a head portion formed at one end of the shaft portion, the bolt being adapted to pass through the first and second mounting holes, and a screw nut adapted to be screwed onto the threaded portion and for connecting, when tightened, the first flange and the at least one second flange, wherein at least one of the head portion and the screw nut includes a convex surface which is oriented towards the respective flange, and wherein the respective flange includes, at the mounting hole, a flange recess which is oriented towards the convex surface.

Various aspects and embodiments of the present invention will now be described in connection with the accompanying drawings, in which:
Fig. 1 is a cross sectional view of a bolt (above) and an associated screw nut (below), according to a typically embodiment;
Fig. 2 is a cross sectional view of two flanges which are connected to each other, according to a typical embodiment;
Fig. 3 illustrates the flange connection shown in Fig. 2 wherein applied stress causes the first and second flanges to be connected to bend such that a gap is closed between the flanges to be connected;
Fig. 4 illustrates a bolt having a shaft portion and a head portion, and a screw nut, according to a typical embodiment;
Fig. 5 illustrates the bolt and the screw nut shown in Fig. 4, wherein the screw nut is screwed onto the threaded portion of the bolt;
Fig. 6 shows one of the flanges to be connected in more detail, together with a screw nut a shoulder of which fits into a flange recess of the flange to be connected; and
Figs. 7a-f show a variety of flange connections applied at a wind turbine, according to typical embodiments.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

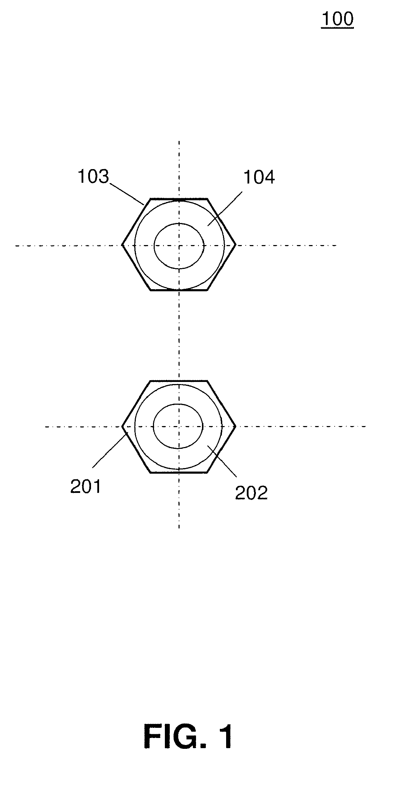

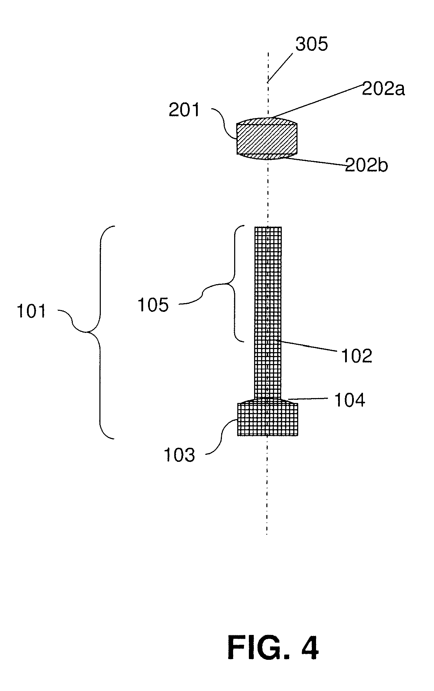

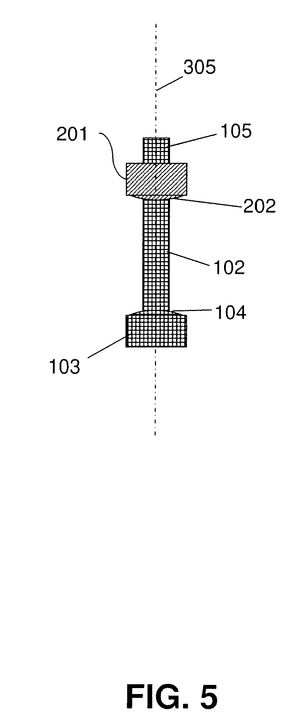

Fig. 1 is a cross sectional view of the shoulder portions of a bolt 101 (above) and an associated screw nut 201 (below), according to a typically embodiment. The cross section is taken in a plane perpendicular to a longitudinal axis 305 illustrated in Fig. 4 and 5 below, at a location where the respective shoulders are formed. As shown in Fig. 1 the screw nut 201 is a hex nut and an associated screw nut shoulder 202 has a circular convex surface.

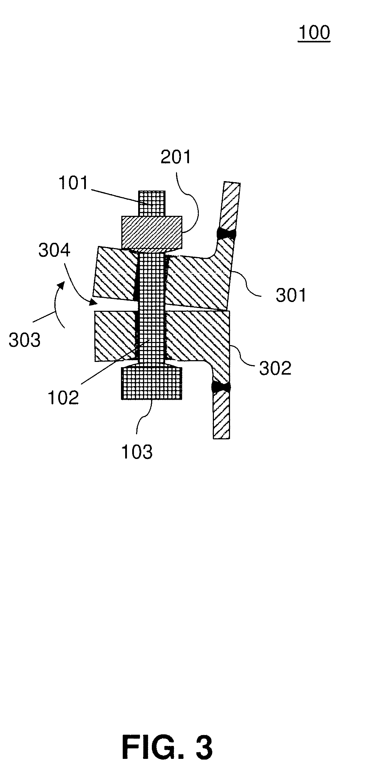

This at least partially circular convex surface is, when a flange connection is used for fastening components to be fastened, adjacent to a surface of the component to be fastened. Whereas a head portion 103 of the bolt 101 is shown to have a circular cross section, as in Fig. 3 above, it is noted that the head portion 103 of the bolt 101 may also have a hexagonal shape such that a wrench may be provided as a tool adapted for tightening the flange connection 100.

According to a typical embodiment the annular surface of the head portion 103 and/or the screw nut 201 which is oriented towards the component to be connected may be formed as a shoulder 104, 202, respectively which may have at least one of an at least partially spherical shape, and a convex shape. The shoulder, i.e. the head shoulder 104 or the screw nut shoulder 202 then extends towards a component or a flange to be connected.

Furthermore screw nut shoulders 202 may be provided at both sides of the screw nut 201 such that the screw nut 201 may be screwed onto the threaded portion 105 of the bolt 101 from two different orientations such that in any case one screw nut shoulder 202 is oriented towards a flange to be fastened. The screw nut 201 then is formed symmetrically with respect to a center plane being perpendicular to the screw nut axis 305.

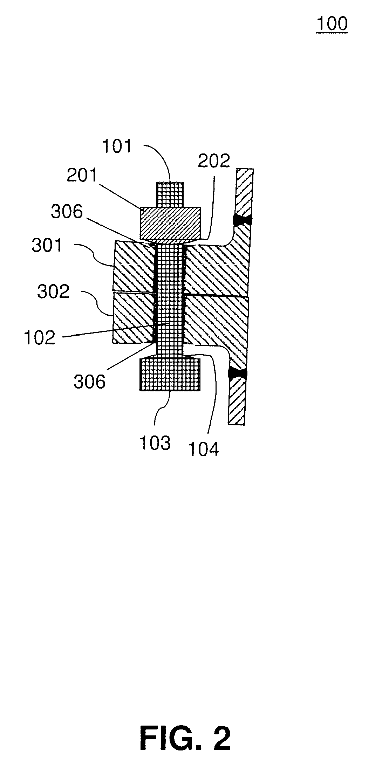

Fig. 2 is a cross sectional view of a flange connection 100 including two flanges 301, 302 which are connected to each other, according to a typical embodiment. Fig. 2 illustrates a first flange 301 and a second flange 302 each having a mounting hole through which the shaft portion 102 of the bolt 101 may be inserted. A screw nut 201 is screwed onto the threaded portion 105 of the shaft 103 of the bolt 101. The screw nut shoulder 202 fits into a flange recess 306 of the first flange 301 such that bending moments acting on a shaft portion 102 of the bolt 101 are reduced.

It is noted here that the threaded portion 105 of the bolt 101 may extend over a part of the shaft portion 102 or over the entire shaft portion 102. As such the shaft portion 102 and the threaded portion 105 of the bolt 101 can be the same.

In addition to that, or instead of, a head shoulder 104 of the head portion 103 of the bolt 101 may fit into a flange recess 306 of the second flange 302 such that again bending moments acting on a shaft portion 102 of the bolt 101 are reduced.

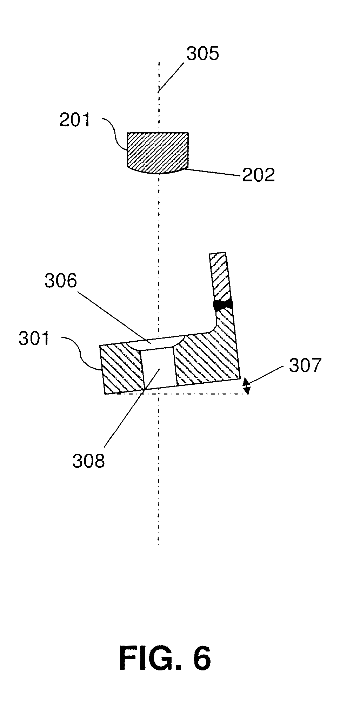

Typical embodiments of the flange recess 306 of the at least one of the first and second flanges 301, 302 include, but are not limited to, spherical shaped sections or conical shaped sections such as a sink hole, a reamed hole, a cone, a funnel shaped recessed portion, etc. It is noted here that doubly curved surfaces such as portions of a sphere may reduce stress caused by bending moments even more than singly curved surfaces such as a cone. Thus, according to typical embodiments, the convex surfaces of the head portion 103 and the screw nuts 201 have a doubly curved surface such as a portion of a sphere, and the concave surfaces of the first and second flanges 301, 302 have a spherical recess 306 (see also Fig. 6)

Furthermore, typical embodiments of the shoulders of the screw nut 201 and/or of the head portion 103 of the bolt 101, i.e. of the shoulders indicated by references numerals 202 and 104 in the drawings, include, but are not limited to, convex shaped sections such as a tapered portion, a spherical cross section, etc. When turning the screw nut 201 in order to tighten the flange connection, e.g. bodies of convex and concave shape are brought in a good relative alignment.

Fig. 3 illustrates the flange connection 100 shown in Fig. 2 wherein applied lateral or off-axis stress causes the first and second flanges 301, 302 to be connected to bend. A gap 304 may be formed between the flanges 301, 302. Such gap 304 may result, for example, from manufacturing imperfections of the flanges 301, 302. In Fig. 3 a bending in a bending direction 303 of the first flange 301 to be connected with respect to the second flange 302 to be connected is shown. Due to the bending in the bending direction 303 the gap 304 is formed between the two contacting surfaces of the components to be connected 301, 302.

As it can be seen from the bended state shown in Fig. 3 compared to the non-bended state shown in Fig. 2 it is clear that a bending moment acting onto the shaft portion 102 of the bolt 101 is reduced using the recess 306 - shoulder 202, 104 combination because both the screw nut 201 and the head portion 103 of the bolt 101 have the convex-shaped annular surface which is oriented towards a surface of the component to be connected. Even if the head portion 103 of the bolt 101 is no longer parallel to a mounting plane of a flange to be connected, the flanges 301, 302 may be connected in a reliable manner without bending of the bolt 101.

Furthermore a radial or circumferential misalignment or stress between the flanges 301 and 302 to be connected may occur without imposing a bending or shearing force onto the shaft portion 102 of the bolt 101 or on the entire bolt 101 or on the entire flange connection 100. Thus a load applied at the bolt 101 due to bending moments or stress acting in directions other than the longitudinal axis 305 (see Fig. 4 and 5) is reduced. The at least two flanges 301, 302 to be connected may be aligned by a radial displacement with respect to at least one of the bolt 101 and the screw nut 201. Using the flange connection 100 in accordance with typical embodiments shown in Fig. 2 and 3 a rigidity of a bolted connection thus is increased.

It is noted here, albeit not shown in Fig. 3, that washers may be used in order to achieve a similar stress reduction effect. Such kind of a washer may be arranged between the head portion 103 and a flange 301, 302 to be connected, and/or between the screw nut 201 and a flange 301, 302 to be connected. The washer may have a convex surface similar to that of the respective head portion and/or screw nut, and a flat surface opposed to the convex surface, wherein in this case the head portion and the screw nut respectively exhibit flat surfaces. The washers then serve as intermediate components sandwiched between a bolt head 103 and a flange 301, 302 to be connected, or between a screw nut 201 and a flange 301, 302 to be connected, respectively.

Fig. 4 illustrates the bolt 101 having a shaft portion 102 and a head portion 103, and a screw nut 201, according to a typical embodiment, in more detail. The head portion 103 has the head shoulder 104 which, according to a typical embodiment, may include a convex annular surface which is oriented towards the components or flanges 301, 302 to be connected (see Fig. 2 and 3 above).

The shaft portion 102 of the bolt 101 includes a threaded portion 105. An inside thread of the screw nut 201 is adapted to the threaded portion 105 of the bolt 101. Thus this screw nut 201 may be screwed onto the threaded portion 105 of the bolt 101. A central axis 305 of the screw nut 201 coincides with a central axis 305 of the bolt 101 when the connection has been carried out.

According to a typical embodiment at least one of the screw nut 201 and the head portion 103 of the bolt 101 may include a shoulder, i.e. a screw nut shoulder 202 and a head shoulder 104, respectively. These shoulders 104, 202 provide a means for applying force to flanges 301, 302 where a bending moment occurs, i.e. where a displacement or a bending with respect to the longitudinal axis 305 is present. Typically, if two or more components to be connected are assembled by means of a flange connection 100 as shown in Fig. 2 and 3 above a bending might occur which results in stress vector components perpendicular to the longitudinal axis 305.

Furthermore Fig. 4 depicts a screw nut 201 in accordance with yet another typical embodiment. Here, screw nut shoulders 202a, 202b, respectively, are provided at both sides of the screw nut 201 such that the screw nut 201 may be screwed onto the threaded portion 105 of the bolt 101 from two different orientations such that in any case one screw nut shoulder 202 is oriented towards a flange or a component to be fastened (not shown in Fig. 4). The screw nut 201 is formed symmetrically with respect to a center plane being perpendicular to the screw nut axis 305.

Fig. 5 illustrates the bolt 101 and the screw nut 201 shown in Fig. 4, wherein the screw nut is screwed onto the threaded portion 105 of the bolt 101. As shown in Fig. 5 the flange connection 100 includes the bolt 101 and the screw nut 201. The shoulders 202, 104 at the screw nut 201 and the head portion 103 of the bolt 101, respectively, are arranged such that they are located opposite to each other, i.e. the screw nut shoulder 202 faces the first flange 301 to be connected (not shown in Fig. 5), wherein the head shoulder 104 of the head portion 103 of the bolt 101 faces the second flange 302 to be connected (not shown in Fig. 5).

Using such kind of a flange connection 100 having the shoulder portions 104, 202 a bolt bending resulting from a relative alignment of the flanges 301, 302 to be connected is reduced, as described with reference to Fig. 3 herein above.

It is noted here that a flange connection 100 having the shoulder portions 104, 202 and the respective flange recesses 306 which are oriented towards the shoulder portions 104, 202 functions in a similar way as convex washers, convex-concave washers, etc. provided as intermediate components sandwiched between a bolt head and a flange to be connected, or between a screw nut and a flange to be connected, respectively. According to at least one of the typical embodiments or a combination of typical embodiments described herein above, an absence of washers provides at least one of cost reduction, and reduction of time for installation of bolts and screw nuts at the flanges to be connected.

Fig. 6 shows one of the flanges 301 having a mounting hole 308 in more detail, together with a screw nut 201 a shoulder 202 of which fits into the flange recess 306 of the flange 301 to be connected.

The screw nut shoulder 202 and the flange recess 306 interact such that a bending about a predetermined tilt angle 307 is permitted without generation of additional stress vector components, shearing stress and/or bending moments. As friction occurs between the components to be connected, pre-stress may be generated. Due to a rotation of at least one of the bolt 101 and the screw nut 201, the components may assume a position where a remaining stress is reduced. Thus the screw nut shoulder 202 - flange recess 306 combination (or the head shoulder 104 - flange recess 306 combination, if the head portion 103 of the bolt 101 is located adjacent to the flange surface) reduce off-axis stresses such that tightening forces applied when tightening the flange connection are predominantly oriented in the direction of the longitudinal axis 305 shown in Fig. 4 and 5.

It is noted here that, albeit in Fig. 6 a screw nut shoulder 202 of a screw nut 201 is shown to fit into the flange recess 306 of the flange 301, 302 to be connected, a head shoulder 104 of a head portion 103 of a bolt 101 described herein above may be arranged adjacent to the flange recess 306.

Bending moments may occur at each of the flanges such that the head shoulder 104 of the bolt 101 and/or the screw nut shoulder 202 of the screw nut 201 may act as a means for receiving forces which are oriented in a direction having a tilt angle with 307 respect to the longitudinal axis described above.

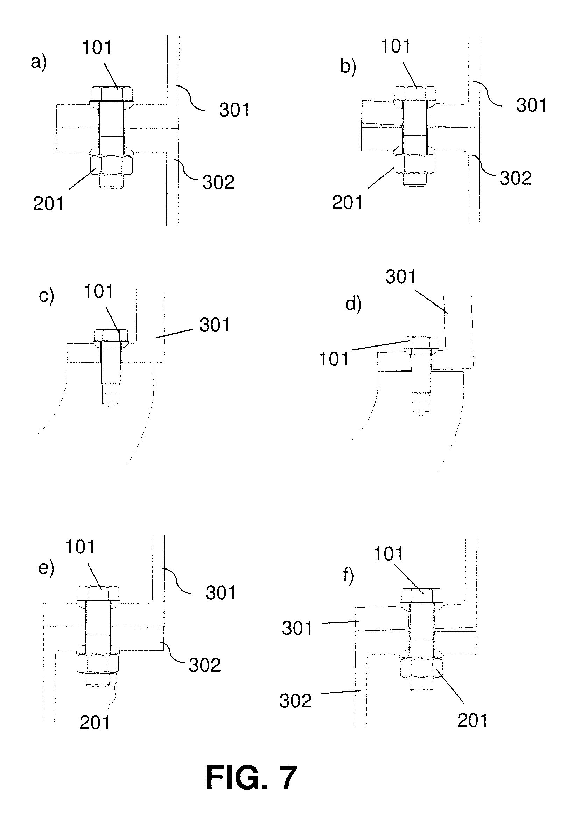

Fig. 7 illustrates a variety of flange connections applied at different components of a wind turbine, according to typical embodiments.

The flange connections shown in Fig. 7 are typically used for
a) a wind turbine tower flange with imperfection, wherein a filling is inserted between the upper and lower flange. The filling is not desirable and its use may be avoided by application of the embodiments of the present invention;
b) a wind turbine tower flange connection shown in a tightened case;
c), d) a wind turbine hub flange connection; these flange connections are typically applied for long bolts; and
e), f) a wind turbine flange connection.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

Various aspects and embodiments of the present invention are defined by the following numbered clauses:
1. A flange connection comprising:
   a first flange having a first mounting hole;
   at least one second flange having a second mounting hole adapted to be aligned with the first mounting hole;
   a bolt comprising a shaft portion having a threaded portion, and a head portion formed at one end of the shaft portion, the bolt being adapted to pass through the first and second mounting holes; and,
   a screw nut adapted to be screwed onto the threaded portion and for connecting, when tightened, the first flange and the at least one second flange,
   wherein at least one of the head portion and the screw nut comprises a convex surface which is oriented towards the respective flange, and,
   wherein the respective flange comprises, at the mounting hole, a flange recess which is oriented towards the convex surface.
2. The flange connection in accordance with clause 1, wherein the convex surface comprises at least one of convex shaped sections, a tapered portion, and a section of an at least partially spherical shape.
3. The flange connection in accordance with any preceding clause, wherein the flange recess of the respective flange comprises at least one of a spherical shaped section, concave shaped section, a sink hole, a reamed hole, a cone, and a funnel shaped recessed portion.
4. The flange connection in accordance with any preceding clause, wherein at least one of the head portion and the screw nut comprises a shoulder.
5. The flange connection in accordance with any preceding clause, wherein the shoulder has an at least partially spherical shape.
6. The flange connection in accordance with any preceding clause, wherein the shoulder has a convex shape.
7. The flange connection in accordance with any preceding clause, wherein the at least one first and second mounting hole is formed as a sink hole wherein the sink is oriented towards at least one of the convex surfaces of the screw nut and the head portion of the bolt.
8. The flange connection in accordance with any preceding clause, wherein the flange connection comprises a screw nut having two concave surfaces formed at opposite sides symmetrically with respect to a center plane being perpendicular to the longitudinal screw nut axis.
9. Use of a flange connection in accordance with any preceding clause for assembling a tower of a wind turbine.
10. A wind turbine having a tower, a machine nacelle and at least one flange connection adapted for mechanically connecting at least two components of the tower or of the machine nacelle, the flange connection comprising:
   a first flange having a first mounting hole;
   at least one second flange having a second mounting hole adapted to be aligned with the first mounting hole;
   a bolt comprising a shaft portion having a threaded portion, and a head portion formed at one end of the shaft portion, the bolt being adapted to pass through the first and second mounting holes; and
   a screw nut adapted to be screwed onto the threaded portion and for connecting, when tightened, the first flange and the at least one second flange,
   wherein at least one of the head portion and the screw nut comprises a convex surface which is oriented towards the respective flange, and
   wherein the respective flange comprises, at the mounting hole, a flange recess which is oriented towards the convex surface.
11. The wind turbine in accordance with any preceding clause, wherein the convex surface comprises at least one of convex shaped sections, a tapered portion, and a section of an at least partially spherical shape.
12. The wind turbine in accordance with any preceding clause, wherein the flange recess of the respective flange comprises at least one of a spherical shaped section, a concave shaped section, a sink hole, a reamed hole, a cone, and a funnel shaped recessed portion.
13. The wind turbine in accordance with any preceding clause, wherein at least one of the head portion and the screw nut comprises a shoulder.
14. The wind turbine in accordance with any preceding clause, wherein the shoulder has an at least partially spherical shape.
15. The wind turbine in accordance with any preceding clause, wherein the shoulder has a convex shape.
16. The wind turbine in accordance with any preceding clause, wherein the at least one first and second mounting hole is formed as a sink hole wherein the sink is oriented towards at least one of the convex surfaces of the screw nut and the head portion of the bolt.
17. The wind turbine in accordance with any preceding clause, wherein the flange connection comprises a screw nut having two concave surfaces formed at opposite sides symmetrically with respect to a center plane being perpendicular to the longitudinal screw nut axis.

## Claims

1. A flange connection (100) comprising:
a first flange (301) having a first mounting hole (308);
at least one second flange (302) having a second mounting hole adapted to be aligned with the first mounting hole (308);
a bolt (101) comprising a shaft portion (102) having a threaded portion (105), and a head portion (103) formed at one end of the shaft portion (102), the bolt (101) being adapted to pass through the first and second mounting holes; and
a screw nut (201) adapted to be screwed onto the threaded portion (105) and for connecting, when tightened, the first flange (301) and the at least one second flange (302),
wherein at least one of the head portion (103) and the screw nut (201) comprises a convex surface which is oriented towards the respective flange, and
wherein the respective flange comprises, at the mounting hole (308), a flange recess (306) which is oriented towards the convex surface.

2. The flange connection (100) in accordance with claim 1, wherein the convex surface comprises at least one of convex shaped sections, a tapered portion, and a section of an at least partially spherical shape.

3. The flange connection (100) in accordance with claim 1 or 2, wherein the flange recess (306) of the respective flange comprises at least one of a spherical shaped section, a concave shaped section, a sink hole, a reamed hole, a cone, and a funnel shaped recessed portion.

4. The flange connection (100) in accordance with any one of the preceding claims, wherein at least one of the head portion (103) and the screw nut (201) comprises a shoulder (104, 202).

5. The flange connection (100) in accordance with claim 4, wherein the shoulder (104, 202) has an at least partially spherical shape.

6. The flange connection (100) in accordance with claim 4 or claim 5, wherein the shoulder (104, 202) has a convex shape.

7. The flange connection (100) in accordance with any one of the preceding claims, wherein the at least one first and second mounting hole (308) is formed as a sink hole wherein the sink is oriented towards at least one of the convex surfaces of the screw nut (201) and the head portion (103) of the bolt (101).

8. The flange connection (100) in accordance with any one of the preceding claims, wherein the flange connection (100) comprises a screw nut (201) having two concave surfaces formed at opposite sides symmetrically with respect to a center plane being perpendicular to the longitudinal screw nut axis.

9. Use of a flange connection (100) in accordance with any one of the preceding claims, for assembling a tower of a wind turbine.
